# EUROPEAN PATENT APPLICATION

(11) **EP 4 663 382 A1**
(43) Date of publication of application: **17.12.2025**
(21) Application number: 24182260.0
(22) Date of filing: 14.06.2024
(51) Int. Cl.: B29C 64/118, B29C 64/321, B29C 64/343, B29C 64/393, B33Y 10/00, B33Y 40/00, B33Y 50/02

(54) **A METHOD FOR DETECTING PRESENCE OF A FILAMENT IN AN ADDITIVE MANUFACTURING SYSTEM FOR FUSED DEPOSITION MODELLING**

(71) Applicant: CREATE IT REAL A/S, 9000 Aalborg (DK)
(72) Inventor: Gay, Jeremie Pierre, 9000 Aalborg (DK); Jensen, Henrik Kort Bergmann, 9000 Aalborg (DK)
(74) Representative: Inspicos P/S

(57) **Abstract**

The invention relates to a method for detecting presence of filament (6) in an additive manufacturing system for fused deposition modelling. The system comprises: a printhead (2); a filament aperture (9) defining an internal passageway for accommodating filament; a light source (4); a photodetector (7) configured to provide a detector signal, wherein the light source and the photodetector are both arranged to face the internal passageway; and a system controller arrangement. The method comprises the steps of: monitoring the detector signal, wherein the detector signal when no filament is present corresponds to a first signal level; feeding the filament in the filament aperture such that at least a portion of light emitted by the light source is redirected by passage of the light through the filament thereby providing a second signal level of the detector signal; and detecting presence of the filament in the filament aperture based on measuring the second signal level.

## Description

### FIELD OF THE INVENTION

The present invention relates to a method for detecting presence of a filament in an additive manufacturing system for fused deposition modelling. The invention further relates to additive manufacturing systems for fused deposition modelling.

### BACKGROUND OF THE INVENTION

Additive manufacturing, also referred to as 3D printing, enables rapid prototyping and the ability of producing complex shapes and geometries. For example, 3D printing enables straightforward manufacturing of articles with unique shapes or properties.

In fused deposition modelling, filament is typically fed to a printhead by means of an extruder motor arranged to translate the filament to the printhead. The filament is typically provided from a filament spool.

It can be beneficial to detect whether the filament is present along the filament feeding path from the spool to the printhead. Such detection is conventionally performed based on, e.g., a mechanical switch which relies on direct physical contact to the filament.

However, detection which relies on direct physical contact introduces friction in the system. Generally, such friction is not desirable since it may result in inconsistent extrusion of the filament at the printhead. This problem can be further amplified when using soft filament and/or when the filament is fed along a relatively long feeding path.

As an alternative to mechanical switches, an optical sensor may be employed. Thereby, the presence of filament may be detected by measuring whether light is absorbed or not.

However, filaments used in fused deposition modelling systems can have vastly different colours, and thereby different absorption properties. Further, colourless filaments also exist. Hence, optical sensors based on absorption of light can be unreliable.

Hence, there is a need for improved methods of frictionless detection of presence of filament which are flexible with regard to various colours of filament, particularly including filament without colour.

### SUMMARY OF THE INVENTION

On the above background, it is an object of preferred embodiments of the present disclosure to provide improved frictionless detection of presence of filament which is flexible with regard to various colours of filament, particularly including filament without colour.

A first aspect of the present disclosure relates to a method for detecting presence of a filament in an additive manufacturing system for fused deposition modelling, the system comprising:
a printhead for heating and depositing filament;
a filament aperture defining an internal passageway for accommodating the filament at a position along a filament feeding path towards the printhead;
a light source arranged at the filament aperture configured to emit light;
a photodetector configured to provide a detector signal, wherein the light source and the photodetector are both arranged to face the internal passageway; and
a system controller arrangement;
wherein the method comprises the steps of:
monitoring the detector signal via the system controller arrangement, wherein the detector signal when no filament is present corresponds to a first signal level;
feeding the filament in the filament aperture such that at least a portion of light emitted by the light source is redirected by passage of the light through the filament thereby providing a second signal level of the detector signal; and
detecting presence of the filament in the filament aperture based on measuring the second signal level of the detector signal via the system controller arrangement, wherein the second signal level is indicative of a different light intensity received by the photodetector than the first signal level.

In contrast to conventional optical sensors which rely on absorption to detect the presence of an optical sensor, examples of the present disclosure utilize that a portion of light can pass through filament, and that this light will be redirected by, e.g., refraction when passing into the filament from the surroundings.

In examples of the present disclosure, the filament may, for example, act as a lens to thereby focus light from the light source onto the photodetector, and as a result, the presence of filament can actually increase the light intensity received by the photodetector. Further, the system controlling arrangement may, optionally, additionally be configured to detect the presence of a filament based on a decrease of light intensity received by the photodetector. Hence, both filaments which absorbs significant portions of light, and filaments which do no absorb significant portions of light can be detected within the concepts introduced in the present disclosure. Further, such examples can allow a distinguishment between which type of filament is actually detected.

Examples of the present disclosure provide a filament aperture defining an internal passageway at which the photodetector and the light source are positioned. Such a filament aperture may be any opening defining an internal passageway which can accommodate filament. The aperture may for example be an opening of a motor for translating the filament. The aperture may for be a section of a filament tube.

Detecting whether filament is present in the filament aperture can also be utilized to determine if filament has been displaced transversely to the filament path.

According to examples of the present disclosure, the presence of the filament between the light source and the photodetector provides a dispersion effect or a focusing effect by which at least a portion of the light emitted by the light source is redirected to increase light received by the photodetector.

According to examples of the present disclosure, the second signal level is indicative of a greater light intensity received by the photodetector than the first signal level.

Such greater light intensity may for example be due to a focusing effect. However, alternatively, the photodetector may also be positioned such that little or no light from the light source arrives at the photodetector when no filament is present. For example, the light source and the photodetector are arranged at different positions along a lengthwise extension of the feeding path, and light from the light source arrives at the photodetector via internal reflection within the filament. In other examples, the photodetector is positioned at a different angle than the angle at which light is emitted from the light source, and refraction of the light passing through the filament redirects the light to the angle of the photodetector.

Generally, it is counterintuitive to determine presence of filament based on a signal level indicative of a light intensity which is increased relative to when no filament is present. Conventionally, filament is considered to block and obstruct light, and the capabilities of filament to redirect light through, e.g., refraction to focus the light, has not previously been utilized.

According to examples of the present disclosure, the light emitted by the light source is redirected by refraction by passage of light through the filament thereby providing the second signal level.

According to examples of the present disclosure, the light emitted by the light source is redirected by internal reflection within the filament.

According to examples of the present disclosure, the light source and the photodetector are arranged at different positions along a lengthwise extension of the feeding path.

According to examples of the present disclosure, the light source and the photodetector are located on opposite sides of the internal passageway such that the photodetector receives light emitted by the light source across the internal passage transverse to a lengthwise extension of the filament feeding path.

According to examples of the present disclosure, the filament has a filament diameter, wherein the photodetector is arranged at a distance within a range of 1.5 times a diameter of the filament from the filament, for example within a range of 1.0 filament diameter from the filament.

Such an arrangement of the filament relative to the photodetector may provide an efficient focusing effect of light from the light source onto the photodetector.

According to examples of the present disclosure, the method further comprises the step of applying a low-pass filter to the detector signal to increase a duration at which the detector signal is at a signal level to detect that signal level.

A filament may have a surface which is not uniform. The amount of light passing through the filament without being absorbed may vary as the filament is translated towards the printhead.

As a result, there is a risk that the system controller arrangement erroneously detects a transparent filament (which may otherwise increase the light intensity detected by the photodetector) as no filament, or as a non-transparent filament.

To mitigate that filaments can have a non-uniform surface, a low-pass filter may be applied. Thereby, a local portion of filament having a greater absorbance has a decreased risk of yielding a detection of no filament or detection of a non-transparent filament.

According to examples of the present disclosure, the method is a part of a system conditioning routine.

According to examples of the present disclosure, the system conditioning routine comprises reversing at least one motor along the filament feeding path to detect presence of the filament at a position along the filament feeding path after the at least one motor.

A system conditioning routine may, for example, be configured to test whether one or more elements or components of a fused deposition modelling system are functional, for example, printhead, filament, light source/photodetector, filament spool, filament motor for translation of filament etc.

According to examples of the present disclosure, the filament has a non-constant transmission coefficient along a longitudinal extension of the filament.

A filament having a non-constant transmission coefficient along a longitudinal extension of the filament is an example of a non-uniform filament.

According to examples of the present disclosure, the non-constant transmission coefficient is provided by pre-processing of the filament, for example to process a surface roughness of the filament.

A pre-processing of the filament may be applied to ensure efficient translation of the filament by a filament motor.

According to examples of the present disclosure, an attenuation coefficient of the filament for light of the light source is at most 1.0 mm⁻¹, for example at most 0.8 mm⁻¹, for example at most 0.6 mm⁻¹, for example at most 0.4 mm⁻¹, such as at most 0.2 mm⁻¹.

Considering the case of uniform attenuation, the attenuation coefficient *µ* provides the intensity *I* of light travelling through an absorbing body as *I*(*z*) = *I*₀ exp(-*µz*), where z is the distance of light travelled in the absorbing body and *I*₀ is the initial intensity.

Examples according to the present disclosure are particularly advantageous for filaments which have a relatively low attenuation coefficient.

According to examples of the present disclosure, the light source has an emission spectrum having a centre emission wavelength, wherein the filament has an absorption spectrum having centre absorption wavelength, wherein the centre emission wavelength is different from the centre absorption wavelength, for example different by 50 nm, for example different by 100 nm, for example different by 150 nm, such as different by 200 nm.

Different centre wavelengths can also be used to quantify a relatively low attenuation of light through the filament.

Preferably, the centre absorption wavelength is in a range from 350 nm to 1600 nm, for example in a range from 400 nm to 1000 nm. The absorption properties of the filament beyond these exemplary ranges are typically not relevant. Hence, the relevant centre absorption wavelength is one within these ranges. A centre absorption wavelength and centre emission wavelength may be quantified in terms of a wavelength at a maximum value of absorption or emission, or, alternatively, as a weighted average.

According to examples of the present disclosure, a refractive index of the filament for the light of the light source is at least 1.30, for example at least 1.35, for example at least 1.40, such as at least 1.45.

Refractive indices as exemplified above may provide adequate focusing of light.

According to examples of the present disclosure, the filament has a hardness of at most 110A on the Shore hardness scale, for example at most 100A such as at most 95A.

According to examples of the present disclosure, the filament is thermoplastic polyurethane.

The hardnesses exemplified above are examples of filament which may be considered as soft in the context of the present disclosure, at least when the filament is thermoplastic polyurethane. The method of detecting filaments disclosed herein may be particularly advantageous for soft filament.

A second aspect of the present disclosure relates to an additive manufacturing system for fused deposition modelling, the system comprising:
a printhead for heating and depositing filament;
a filament aperture defining an internal passageway for accommodating the filament at a position along a filament feeding path towards the printhead;
a light source arranged at the filament aperture configured to emit light;
a photodetector configured to provide a detector signal, wherein the light source and the photodetector are both arranged to face the internal passageway; and
a system controller arrangement;
wherein the system controller arrangement is configured to:
monitor the detector signal from the photodetector, wherein the detector signal when no filament is present corresponds to a first signal level; and
detect presence of the filament in the filament aperture based on measuring a second signal level of the detector signal, wherein the second signal level is indicative of a different light intensity received by the photodetector than the first signal level.

According to examples of the present disclosure, the light source and the photodetector are arranged relative to the internal passageway such that filament which is fed through the aperture redirects at least a portion of light emitted by the light source to the photodetector to provide the second signal level.

According to examples of the present disclosure, the system comprises a filament tube having a lengthwise extension defining the internal passageway along at least a portion of the filament feeding path.

According to examples of the present disclosure, the filament aperture corresponds to a section of the filament tube.

According to examples of the present disclosure, the internal passageway is arranged such that a filament in the filament aperture provides a dispersion effect or a focusing effect for light emitted by the light source passing through the filament to increase light received by the photodetector.

According to examples of the present disclosure, the system controller arrangement if further configured to:
detect presence of the filament in the filament aperture based on measuring a third signal level of the detector signal, wherein the third signal level is indicative of a smaller light intensity received by the photodetector than the first signal level.

Hence, the system can thereby be capable of detecting both filaments which are transparent (relative to the light emitter by the light source) and filaments which are opaque. Further, this may allow the system controller arrangement to be capable of detecting whether a detected filament is transparent or opaque.

According to examples of the present disclosure, the system controller arrangement is configured to apply a low-pass filter to the detector signal to increase a duration at which the detector signal is at a signal level to detect that signal level.

Such a filter may be capable of reducing the risk that a filament having a non-uniform absorbance results in an incorrect detection.

According to examples of the present disclosure, a time constant of the low-pass filter is at least 0.1 second, for example at least 0.3 s, such as at least 0.5 s.

The time constant may be quantified in terms of the response of the filtered signal upon providing a step function. The time constant is then the time at which the filtered signal has shifted by A/e relative to the initial value, where A is the amplitude of the step function and e is Euler's number.

The time constants exemplified above are at time scales which are significantly greater than, for example, the time constants of filters directed at reducing noise of conventional noise sources.

Generally, the detection of presence of the filament may directly or indirectly prompt or trigger the system controller arrangement to perform one or more actions related to operation of the additive manufacturing system. Examples of such actions are provided in the following.

According to examples of the present disclosure, the system controller arrangement is further configured to:
provide a filament presence signal, wherein the system controller arrangement changes the filament presence signal based on whether the presence of the filament is detected.

Such a filament presence signal may for example be used for further processing in the system controller arrangement, for example for logic processing in which various actions is performed based on whether the presence of filament is detected or not.

According to examples of the present disclosure, the system controller arrangement is further configured to:
provide a first filament presence signal when the presence of the filament in the filament aperture is detected based on the second signal level, and
provide a second filament presence signal when the presence of the filament in the filament aperture is detected based on the third signal level.

Thereby, different presence signals can be provided based on whether transparent filament or opaque filament is detected.

According to examples of the present disclosure, the system controller arrangement is further configured to:
provide an audial indication or a visual indication of the presence of the filament based on whether the presence of the filament is detected.

Thus, a user or an operator can receive indication of whether filament is detected.

According to examples of the present disclosure, the system controller arrangement is further configured to:
increase a filament translation speed of a motor arranged to translate the filament in response to detecting the presence of the filament; or
decrease a filament translation speed of a motor arranged to translate the filament in response to detecting the presence of the filament.

According to examples of the present disclosure, the system controller arrangement is further configured to:
increase a filament translation speed of a first motor arranged to translate the filament in response to detecting the presence of the filament; and
decrease a filament translation speed of a second motor arranged to translate the filament in response to detecting the presence of the filament.

Examples of increasing a filament translation speed of a motor include starting a motor which was otherwise stopped, and examples of decreasing a filament translation speed of a motor include stopping a motor which was otherwise translating the filament.

Increasing or decreasing the speed of a (filament) motor may for example be relevant which changing from a filament source having a first filament to another filament source having a second filament. Increasing or decreasing the speed of a motor may also be relevant to compensate for inconsistent extrusion.

According to examples of the present disclosure, the light source has an emission spectrum having a centre wavelength in a range from 350 nm to 750 nm.

Thereby, a filament which appears to be transparent to the human eye will also be transparent to light of the light source. Further, the refractive index of the filament may be greater in this range of wavelengths than in, e.g., wavelengths greater than 750 nm, and accordingly, light is more efficiently redirected.

According to examples of the present disclosure, the photodetector has an absorption spectrum having a centre wavelength, wherein the emission spectrum at least partly overlap with the absorption spectrum, wherein the centre wavelength of the emission spectrum is different from the centre wavelength of the absorption spectrum.

Having partially overlapping spectre may serve as a noise filter. The resulting lower signal recorded can be amplified if necessary.

According to examples of the present disclosure, the filament aperture has an inner diameter and an aperture centre, wherein the photodetector is arranged within 1.0 inner diameter of the aperture centre, for example within 0.8 inner diameter, such as within 0.7 inner diameter.

Such a positioning of the photodetector relative to the filament aperture may provide an efficient focusing effect of light from the light source onto the photodetector.

According to examples of the present disclosure, the system controller arrangement is further configured to detect translation of the filament in the filament aperture based on detecting a change in the detector signal.

As an alternative or an addition to detecting presence of filament, the concept of utilizing light redirected by passage of the light through the filament can be used to detect whether the filament is moving or not. Since filament can be non-uniform, a filament which is translated while redirecting light will often provide a non-constant signal level. Accordingly, by measuring any change in the detector signal level, translation of the filament can be detected.

A third aspect of the present disclosure relates to an additive manufacturing system for fused deposition modelling, the system comprising:
a printhead for heating and depositing filament;
a filament aperture defining an internal passageway for accommodating the filament at a position along a filament feeding path towards the printhead;
a light source arranged at the filament aperture configured to emit light;
a photodetector configured to provide a detector signal, wherein the light source and the photodetector both arranged to face the internal passageway; and
a system controller arrangement;
wherein the system controller arrangement is configured to:
monitor the detector signal from the photodetector; and
detect translation of the filament in the filament aperture based on detecting a change in the detector signal.

Hence, translation of filament may be detected independently of whether presence of the filament is detected.

According to examples of the present disclosure, the light source and the photodetector are arranged relative to the internal passageway such that filament which is fed through the aperture redirects at least a portion of light emitted by the light source to the photodetector to provide the change in the detector signal.

### BRIEF DESCRIPTION OF THE DRAWINGS

Embodiments of the invention will now be further described by reference to the accompanying drawings, in which:
Fig. 1 illustrates an additive manufacturing system according to an example of the present disclosure,
Fig. 2 illustrates an exemplary detector signal,
Fig. 3a-c illustrates various implementations of a light source and a photodetector configured to detect light redirected by passage of the light through filament,
Fig. 4 illustrates an additive manufacturing system according to another example of the present disclosure,
Fig. 5 illustrates method steps according to an example of the present disclosure,
Fig. 6 illustrates an additive manufacturing system according to an additional example of the present disclosure, and
Fig. 7 illustrates an additional implementation of a light source and a photodetector according to examples of the present disclosure.

### DETAILED DESCRIPTION

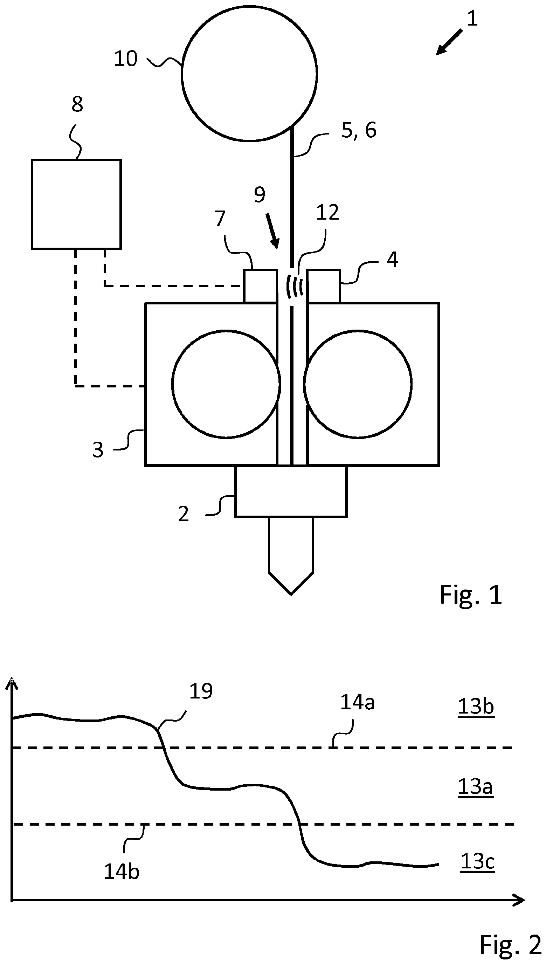

Fig. 1 illustrates an additive manufacturing system according to an example of the present disclosure,

The system 1 comprises a printhead 2 for heating and depositing filament 6 from a filament spool 10. Further, the printhead 2 is movable, preferably in at least two dimensions in a horizontal plane. Thereby, the printhead 2 can deposit the heated filament 6 onto a printing bed (not shown) to thereby additively manufacture an object (not shown). Either the printhead 2 or the printing bed may typically be moveable in a vertical direction. The printhead 2 is controlled by a system controlling arrangement 8. Such a controlling arrangement 8 may for example be implemented as a central processing unit or a programmable logic device in communication with a digital storage. The controlling arrangement 8 may further comprise additional units such as any number of programmable logic circuits, drivers (for motors or sensors), converters, etc.

The filament 6 is translated forward through the printhead 2 via a filament motor 3 arranged prior to the printhead relative to a filament feeding path 5 along which the filament 6 is translated from the filament spool 10 to the printhead 2.

The system controlling arrangement 8 may e.g., use standard hardware circuits, using software programs and data in conjunction with a suitably programmed digital microprocessor or a general-purpose computer e.g., an ArduinoTM programmed with suitable computer code for enabling the functions described herein, and/or using applications specific integrated circuitry, e.g. using standard servo systems or step- motors. Software program instructions and data may be stored on a non-transitory, computer-readable storage medium, and when the instructions are executed by a computer or other suitable processor control, the computer or processor performs the functions associated with those instructions for performing the stated functions of the controlling arrangement.

The system 1 further comprises a light source 4 and a photodetector 7. The light source 4 is configured to emit light 12 and the photodetector 7 is configured to provide a detector signal upon receiving the light 12 emitted by the light source 4.

The light source 4 and the photodetector 7 are arranged at a filament aperture 9 having an internal passageway for accommodating the filament 6 at a position along the filament feeding path 5. In the present example, the light source 4 and the photodetector 7 are located on opposite sides of the internal passageway and an opening at the filament motor 3 constitutes the filament aperture 9.

The system controller arrangement 8 is configured to monitor the detector signal from the photodetector 7. The detector signal is indicative of the intensity received by the photodetector 7. When no filament 6 is present in the filament aperture 9, the detector signal corresponds to a first signal level.

The light source 4 and the photodetector 7 are arranged relative to the internal passageway of the aperture 9 such that filament which is fed through the aperture 9 redirects at least a portion of light 12 emitted by the light source 4 to the photodetector 7 to provide a second signal level indicative of a different light intensity received by the photodetector 7 than the first signal level. In the present example, the light 12 is redirected by refraction by passage of the light 12 through the filament 6 which thereby provides a focusing effect by which at least a portion of the light 12 emitted by the light source 4 us redirected to increase light received by the photodetector 7. Thus, the second signal level received when filament 6 is present in the filament aperture 9 is indicative of a greater light intensity received by the photodetector 7 than the first signal level.

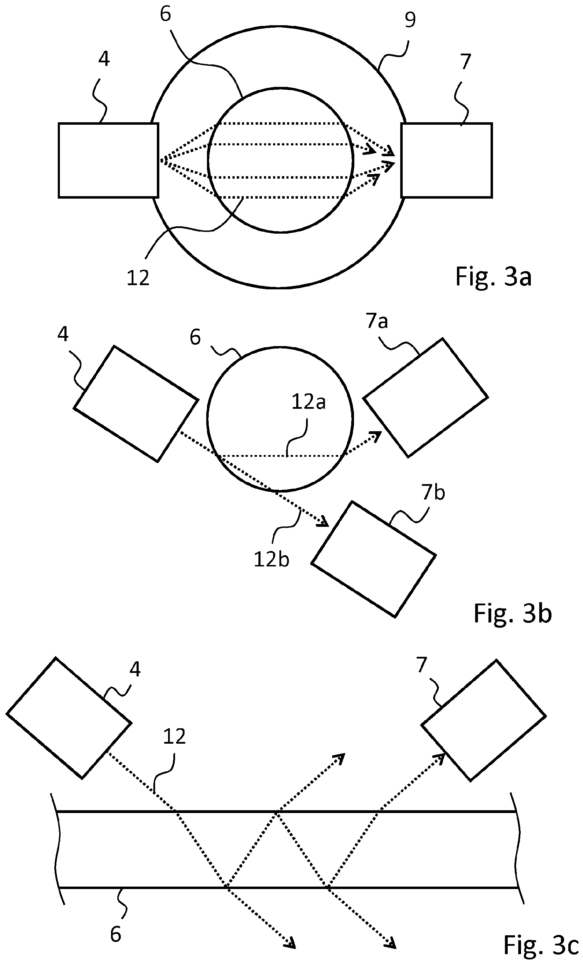

More detailed examples of relative configurations of the light source 4 and the photodetector 7 are provided in Figs. 3a-c.

While the system controller arrangement 8 monitors the detector signal, the presence of filament 6 can thereby be detected upon measuring a second signal level indicative of an increased intensity of light received by the photodetector 7. In practice, the detection may be facilitated by, e.g., a signal threshold between the first and second signal levels.

When the presence of filament has been detected, the system controller arrangement may optionally proceed to perform an action, for example by providing a filament presence signal, providing an indication, or changing a motor speed.

Fig. 2 illustrates an exemplary detector signal 19. The signal 19 is illustrated in a coordinate system in which the horizontal axis represents time and the vertical axis represents the magnitude of the detector signal 19, which in turn is indicative of intensity of light received by the photodetector.

In the present example, the illustration has been separated into three different signal levels 13a, 13b, 13c. The first signal level 13a corresponds to the detector signal when no filament is presence. The second signal level 13b is indicative of a greater light intensity than the first signal level 13a and corresponds to the presence of an at least partly transparent filament. The third signal level 13c is indicative of a smaller light intensity received by the photodetector than the first signal level 13a and corresponds to the presence of an opaque filament.

The first and the second signal levels 13a, 13b are separated by a first signal level threshold 14a, and the first and the third signal levels 13a, 13c are separated by a second signal level threshold 14b. A system controlling arrangement can thereby measure that the detector signal 19 is at the second signal level 13b by determining that the first signal level threshold 14a is traversed (in an upwards direction), and measure that the detector signal 19 is at the third signal level 13c by determining that the second signal level threshold 14b is traversed (in a downwards direction). Such determination may optionally involve additional signal processing, such as filtering.

Fig. 3a-c illustrates various implementations of a light source 4 and a photodetector 7 configured to detect light 12 redirected by passage of the light through filament 6.

In Fig. 3a, a cross-sectional view of the light source 4, the photodetector 7, the filament 6, and the filament aperture 9 is provided. The light source 4 and the photodetector 7 are located on opposite sides of the internal passageway of a filament aperture 9 such that the photodetector 7 receives light 12 emitted by the light source across the internal passage. The light source 4 and the photodetector are positioned at the same position along a lengthwise extension of the filament feeding path (i.e., at the same position along an axis perpendicular to the illustration).

Rays of light 12 are emitted from the light source 7. When no filament 6 is present, a small fraction of this light 12 is received by the photodetector 7. However, when filament 6 is present, the filament 6 acts as a lens to redirect and focus rays of light 12 emitted from a light source 4towards the photodetector 7. Thereby, a greater fraction of the light 12 is received by the photodetector 7 when filament 6 is present.

In Fig. 3b, a cross-sectional view of the light source 4, the filament 6, and two possible arrangements of a photodetector 7a, 7b is provided. The illustrated configuration is functional with the first photodetector 7a alone, with the second photodetector alone 7b, and with both photodetectors 7a, 7b in combination.

The light source 4 is illustrated with two exemplary rays of light 12a, 12b. The first ray of light 12a indicates the path of the light when filament 6 is present, and the second ray of light 12b indicates the path of light when the filament 6 is not present.

The first photodetector 7a is located at an inclined angle relative to the direction in which light 12a, 12b of the light source 4 is emitted. When filament 6 is present, refraction of light through the filament 6 will ensure that a portion of light from the light source 4 is redirected to the first photodetector 7a. This is indicated by the first ray of light 12a in the illustration. When no filament 6 is present, less light will arrive at the first photodetector 7a since the light is not redirected. This is indicated by the second ray of light 12b in the illustration.

The second photodetector 7b is arranged in the direction in which light 12a, 12b of the light source 4 is emitted. When filament 6 is present, refraction of light through the filament ensures that a portion of light from the light source is redirected away from the second photodetector 7b as indicated by the first ray of light 12a. When no filament 6 is present, more light will arrive at the second photodetector 7b since the light is not redirected as indicated by the second ray of light 12b.

In Fig. 3c, a side view of the light source 4, the photodetector 7, and the filament 6 is provided. Further, light emitted by the light source is represented in the illustration by a ray of light 12.

In this example, the light source 4 is arranged at an inclined angle relative to a longitudinal direction of the filament 6. As a result, at least some of the light 12 emitted by the light source 4 will be reflected internally in the filament. Thereby, some of the light will arrive at the photodetector 7, which is arranged at a position along a lengthwise extension of the filament 6 different from the position of the light source 4. If no filament 6 is present, less light 12 from the light source 4 will arrive at the photodetector 7 since the light 12 cannot be internally reflected within the filament 6 to propagate to the photodetector 7.

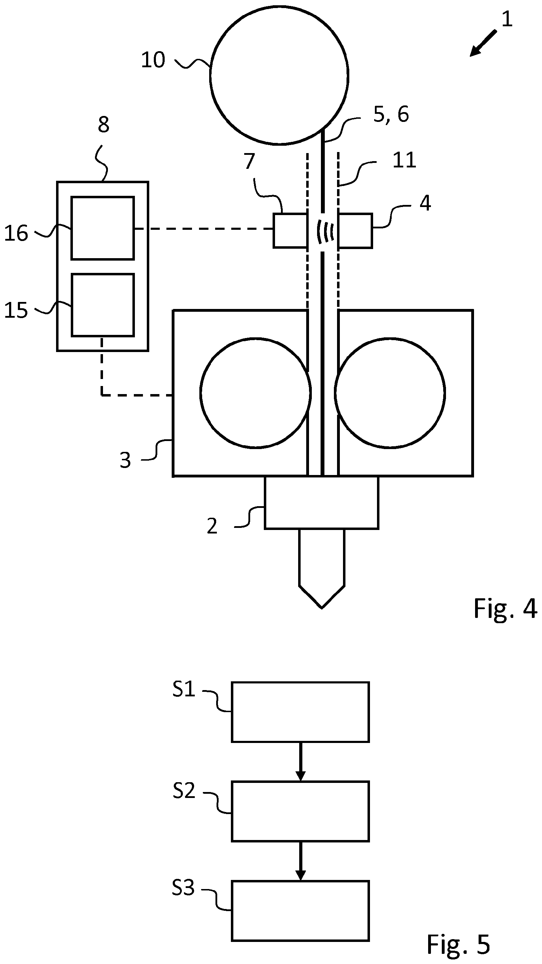

Fig. 4 illustrates an additive manufacturing system 1 according to another example of the present disclosure. In comparison with the system illustrated in Fig. 1, the additive manufacturing system 1 illustrated in Fig. 4 filament tube 11 having a lengthwise extension defining the internal passageway along at least a portion of the filament feeding path 5. The filament aperture at which the light source 4 and the photodetector 7 are arranged corresponds to a section of this filament tube 11.

Further, in this example, the system controlling arrangement 8 comprises a separate printer controller 15 and a separate filament detection unit 16. The printer controller 15 performs control of the conventional additive manufacturing operation, i.e., it operates the filament motor 3 as well as the printhead and motion thereof relative to a printing bed, for example motion in a Cartesian coordinate system. The filament detection unit 16 monitors the detector signal from the photodetector 7 and processes this signal to detect the present of filament 6 in the filament tube 11.

The filament detection unit 16 may be implemented as a programmable logic device, such as a programmable logic circuit or a field-programmable gate array, separately from the printer controller. The filament detection unit 16 may be communicatively connected to the printer controller 15 such that operation of the additive manufacturing system 1 via the printer controller can be adapted based on the detection of presence of the filament 6.

Fig. 5 illustrates method steps S1, S2, S3 according to an example of the present disclosure. The method steps can be performed via an additive manufacturing system as disclosed herein, for example the additive manufacturing system illustrated in Fig. 1.

In a first step S1, a detector signal is monitored via a system controller arrangement. The detector signal corresponds to a first signal level when no filament is present.

In another step S2, filament 6 is fed into a filament aperture. A light source and a photodetector are both arranged to face an internal passageway of that aperture. Since the filament is fed into the filament aperture, at least a portion of light emitted by the light source is redirected by passage of the light through the filament. The light can, for example, be redirected by refraction. The redirection of light provides a second signal level of the detector signal.

In another step S3, the presence of the filament in the filament aperture is detected based on measuring said second signal level of the detector signal via the system controller arrangement. The second signal level corresponds to a different light intensity received by the photodetector than the first signal level.

Optionally, the detection of presence of the filament triggers the system controller arrangement to perform a further action.

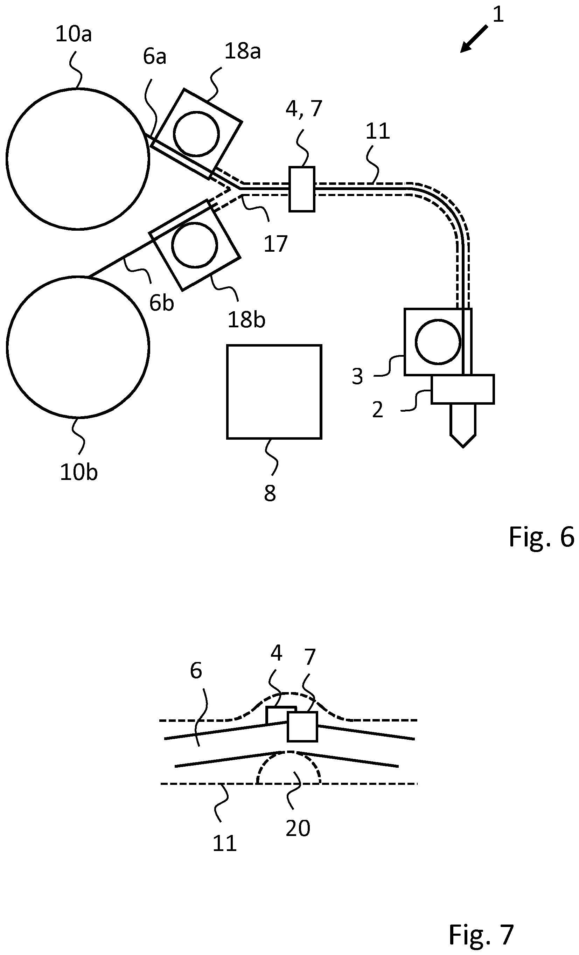

Fig. 6 illustrates an additive manufacturing system 1 according to an additional example of the present disclosure.

In this example, the additive manufacturing system 1 comprises a first filament spool 10a supplying a first filament 6a and a second filament spool 10b supplying a second filament 6b.

In addition to the filament motor 3, which is arranged at the printhead 2, the system 1 further comprises a first auxiliary motor 18a for feeding the first filament 6a from the first filament spool 10a towards the printhead 2 and a second auxiliary motor 18b for feeding the second filament 6b from the second filament spool 10b towards the printhead 2. The first filament 6a from the first filament spool 10a is translated towards the printhead 2 along a first filament path, and the second filament 6b from the second filament spool is translated towards the printhead 2 along a second filament path, wherein the first filament path and the second filament path merge in a merging point 17.

The filament motor 3 is located after the merging point relative to the filament paths. Moreover, in the present example, the light source 4 and the photodetector 7 are arranged after the merging point 17. However, note that in other examples, the light source and the photodetector are arranged prior to the merging point 17 such that the presence of filament can be detected in relation to, e.g., a specific filament spool. Further, examples may have several pairs of light sources and photodetectors, for example arranged both prior to and after a merging point 17.

In the present example, the light source and the photodetector can, for example, be employed to detect whether filament is present, and if no filament is detected, operation via filament from another filament spool can automatically be initiated. For example, if the first filament 6a from the first filament spool 10a is used up, the first auxiliary motor 18a can be stopped and the second auxiliary motor can be started to thereby initiate operation via the second filament 6b from the second filament spool 10b.

For some direction of time after lack of presence of filament is detected because the first filament 6a from the first filament spool 10a terminates, the final portion of the first filament 6a can still be translated towards the printhead 2 by the filament motor 3. During this, translation of the second filament 6b via the second auxiliary motor 18b can optionally be temporarily increased relative to translation via the filament motor 3 such that the second filament 6b can catch up to the first filament 6a.

Fig. 7 illustrates an additional implementation of a light source 4 and a photodetector 7 according to examples of the present disclosure.

In this particular example, the light source 4 and the photodetector 7 are arranged at a section of a filament tube 11. At that section of the filament tube 11, a protruding element is also present.

According to examples of the present disclosure, the filament aperture comprises a protruding element protruding partially into the internal passageway from a perimeter of the filament aperture, the protruding element arranged to displace the filament transversely to the filament feeding path.

The protruding element can for example be a fixed element such as an internal bulge of a filament tube, or a movable element such as a roller or a bearing positioned inside a filament tube.

Such a protruding element may, at least partly, ensure that the position of the filament within the internal passageway of the filament tube varies less while the filament is in tension.

This may in turn provide a more accurate measurement of light from the light source redirected to the photodetector, since the risk of transversal displacement of the filament, which may affect the detector signal, is reduced.

Further, such a protruding element may, at least partly, ensure that any transversal displacement of filament upon loss of tension primarily occurs at a specific portion along the feeding path for the filament. In turn, this can ensure improved accuracy of the detector signal if the detector signal is also used to detect bulging of the filament, or to detect a loss of tension of the filament.

In the example illustrated in Fig. 7, the protruding element 20 displaces the filament 6 in a transverse direction, such that the filament is positioned between the light source 4 and the photodetector 7.

### List of figure references:

- 1: additive manufacturing system
- 2: printhead
- 3: filament motor
- 4: light source
- 5: feeding path
- 6: filament
- 7: photodetector
- 8: system controlling arrangement
- 9: filament aperture
- 10: filament spool
- 11: filament tube
- 12: light
- 13: signal level
- 14: signal level threshold
- 15: printer controller
- 16: filament detection unit
- 17: merging point
- 18: auxiliary motor
- 19: detector signal
- 20: protruding element

### LIST OF NUMBERED EMBODIMENTS

1. A method for detecting presence of a filament in an additive manufacturing system for fused deposition modelling, the system comprising:
   a printhead for heating and depositing filament;
   a filament aperture defining an internal passageway for accommodating the filament at a position along a filament feeding path towards the printhead;
   a light source arranged at the filament aperture configured to emit light;
   a photodetector configured to provide a detector signal, wherein the light source and the photodetector are both arranged to face the internal passageway; and
   a system controller arrangement;
   wherein the method comprises the steps of:
   monitoring the detector signal via the system controller arrangement, wherein the detector signal when no filament is present corresponds to a first signal level;
   feeding the filament in the filament aperture such that at least a portion of light emitted by the light source is redirected by passage of the light through the filament thereby providing a second signal level of the detector signal; and
   detecting presence of the filament in the filament aperture based on measuring the second signal level of the detector signal via the system controller arrangement, wherein the second signal level is indicative of a different light intensity received by the photodetector than the first signal level.
2. The method according to embodiment 1, wherein the presence of the filament between the light source and the photodetector provides a dispersion effect or a focusing effect by which at least a portion of the light emitted by the light source is redirected to increase light received by the photodetector.
3. The method according to any of the preceding embodiments, wherein the second signal level is indicative of a greater light intensity received by the photodetector than the first signal level.
4. The method according to any of the preceding embodiments, wherein the light emitted by the light source is redirected by refraction by passage of light through the filament thereby providing the second signal level.
5. The method according to any of the preceding embodiments, wherein the light emitted by the light source is redirected by internal reflection within the filament.
6. The method according to any of the preceding embodiments, wherein the light source and the photodetector are arranged at different positions along a lengthwise extension of the feeding path.
7. The method according to any of the preceding embodiments, wherein the light source and the photodetector are located on opposite sides of the internal passageway such that the photodetector receives light emitted by the light source across the internal passage transverse to a lengthwise extension of the filament feeding path.
8. The method according to any of the preceding embodiments, wherein the filament has a filament diameter, wherein the photodetector is arranged within a range of 1.5 filament diameter from the filament, for example within a range of 1.0 filament diameter from the filament.
9. The method according to any of the preceding embodiments, wherein the method further comprises the step of applying a low-pass filter to the detector signal to increase a duration at which the detector signal is at a signal level to detect that signal level.
10. The method according to any of the preceding embodiments, wherein the method is a part of a system conditioning routine.
11. The method according to embodiment 10, wherein the system conditioning routine comprises reversing at least one motor along the filament feeding path to detect presence of the filament at a position along the filament feeding path after the at least one motor.
12. The method according to any of the preceding embodiments, wherein the filament has a non-constant transmission coefficient along a longitudinal extension of the filament.
13. The method according to embodiment 12, wherein the non-constant transmission coefficient is provided by pre-processing of the filament, for example to process a surface roughness of the filament.
14. The method according to any of the preceding embodiments, wherein an attenuation coefficient of the filament for light of the light source is at most 1.0 mm⁻¹, for example at most 0.8 mm⁻¹, for example at most 0.6 mm⁻¹, for example at most 0.4 mm⁻¹, such as at most 0.2 mm⁻¹.
15. The method according to any of the preceding embodiments, wherein the light source has an emission spectrum having a centre emission wavelength, wherein the filament has an absorption spectrum having centre absorption wavelength, wherein the centre emission wavelength is different from the centre absorption wavelength, for example different by 50 nm, for example different by 100 nm, for example different by 150 nm, such as different by 200 nm.
16. The method according to any of the preceding embodiments, wherein a refractive index of the filament for the light of the light source is at least 1.30, for example at least 1.35, for example at least 1.40, such as at least 1.45.
17. The method according to any of the preceding embodiments, wherein the filament has a hardness of at most 110A on the Shore hardness scale, for example at most 100A such as at most 95A.
18. The method according to any of the preceding embodiments, wherein the filament is thermoplastic polyurethane.
19. An additive manufacturing system for fused deposition modelling, the system comprising:
   a printhead for heating and depositing filament;
   a filament aperture defining an internal passageway for accommodating the filament at a position along a filament feeding path towards the printhead;
   a light source arranged at the filament aperture configured to emit light;
   a photodetector configured to provide a detector signal, wherein the light source and the photodetector are both arranged to face the internal passageway; and
   a system controller arrangement;
   wherein the system controller arrangement is configured to:
   monitor the detector signal from the photodetector, wherein the detector signal when no filament is present corresponds to a first signal level; and
   detect presence of the filament in the filament aperture based on measuring a second signal level of the detector signal, wherein the second signal level is indicative of a different light intensity received by the photodetector than the first signal level.
20. The additive manufacturing system according to embodiment 19, wherein the light source and the photodetector are arranged relative to the internal passageway such that filament which is fed through the aperture redirects at least a portion of light emitted by the light source to the photodetector to provide the second signal level.
21. The additive manufacturing system according to any of embodiments 19-20, wherein the system comprises a filament tube having a lengthwise extension defining the internal passageway along at least a portion of the filament feeding path.
22. The additive manufacturing system according to embodiment 21, wherein the filament aperture corresponds to a section of the filament tube.
23. The additive manufacturing system according to any of embodiments 19-22, wherein the internal passageway is arranged such that a filament in the filament aperture provides a dispersion effect or a focusing effect for light emitted by the light source passing through the filament to increase light received by the photodetector.
24. The additive manufacturing system according to any of embodiments 19-23, wherein the system controller arrangement if further configured to:
   detect presence of the filament in the filament aperture based on measuring a third signal level of the detector signal, wherein the third signal level is
   indicative of a smaller light intensity received by the photodetector than the first signal level.
25. The additive manufacturing system according to any of embodiments 19-24, wherein the system controller arrangement is configured to apply a low-pass filter to the detector signal to increase a duration at which the detector signal is at a signal level to detect that signal level.
26. The additive manufacturing system according to embodiment 25, wherein a time constant of the low-pass filter is at least 0.1 second, for example at least 0.3 s, such as at least 0.5 s.
27. The additive manufacturing system according to any of embodiments 19-26, wherein the system controller arrangement is further configured to:
   provide a filament presence signal, wherein the system controller arrangement changes the filament presence signal based on whether the presence of the filament is detected.
28. The additive manufacturing system according to any of embodiments 19-27, wherein the system controller arrangement is further configured to:
   provide a first filament presence signal when the presence of the filament in the filament aperture is detected based on the second signal level, and
   provide a second filament presence signal when the presence of the filament in the filament aperture is detected based on the third signal level.
29. The additive manufacturing system according to any of embodiments 19-28, wherein the system controller arrangement is further configured to:
   provide an audial indication or a visual indication of the presence of the filament based on whether the presence of the filament is detected.
30. The additive manufacturing system according to any of embodiments 19-29, wherein the system controller arrangement is further configured to:
   increase a filament translation speed of a motor arranged to translate the filament in response to detecting the presence of the filament; or
   decrease a filament translation speed of a motor arranged to translate the filament in response to detecting the presence of the filament.
31. The additive manufacturing system according to any of embodiments 19-30, wherein the system controller arrangement is further configured to:
   increase a filament translation speed of a first motor arranged to translate the filament in response to detecting the presence of the filament; and
   decrease a filament translation speed of a second motor arranged to translate the filament in response to detecting the presence of the filament.
32. The additive manufacturing system according to any of embodiments 19-31, wherein the light source has an emission spectrum having a centre wavelength in a range from 350 nm to 750 nm.
33. The additive manufacturing system according to any of embodiments 19-32, wherein the photodetector has an absorption spectrum having a centre wavelength, wherein the emission spectrum at least partly overlap with the absorption spectrum, wherein the centre wavelength of the emission spectrum is different from the centre wavelength of the absorption spectrum.
34. The additive manufacturing system according to any of embodiments 19-33, wherein the filament aperture has an inner diameter and an aperture centre, wherein the photodetector is arranged within 1.0 inner diameter of the aperture centre, for example within 0.8 inner diameter, such as within 0.7 inner diameter.
35. The additive manufacturing system according to any of embodiments 19-34, wherein the system controller arrangement is further configured to detect translation of the filament in the filament aperture based on detecting a change in the detector signal.
36. An additive manufacturing system for fused deposition modelling, the system comprising:
   a printhead for heating and depositing filament;
   a filament aperture defining an internal passageway for accommodating the filament at a position along a filament feeding path towards the printhead;
   a light source arranged at the filament aperture configured to emit light;
   a photodetector configured to provide a detector signal, wherein the light source and the photodetector both arranged to face the internal passageway; and
   a system controller arrangement;
   wherein the system controller arrangement is configured to:
   monitor the detector signal from the photodetector; and
   detect translation of the filament in the filament aperture based on detecting a change in the detector signal.
37. The additive manufacturing system according to embodiment 36, wherein the light source and the photodetector are arranged relative to the internal passageway such that filament which is fed through the aperture redirects at least a portion of light emitted by the light source to the photodetector to provide the change in the detector signal.

## Claims

1. A method for detecting presence of a filament in an additive manufacturing system for fused deposition modelling, the system comprising:
a printhead for heating and depositing filament;
a filament aperture defining an internal passageway for accommodating the filament at a position along a filament feeding path towards the printhead;
a light source arranged at the filament aperture configured to emit light;
a photodetector configured to provide a detector signal, wherein the light source and the photodetector are both arranged to face the internal passageway; and
a system controller arrangement;
wherein the method comprises the steps of:
monitoring the detector signal via the system controller arrangement, wherein the detector signal when no filament is present corresponds to a first signal level;
feeding the filament in the filament aperture such that at least a portion of light emitted by the light source is redirected by passage of the light through the filament thereby providing a second signal level of the detector signal; and
detecting presence of the filament in the filament aperture based on measuring the second signal level of the detector signal via the system controller arrangement, wherein the second signal level is indicative of a different light intensity received by the photodetector than the first signal level.

2. The method according to claim 1, wherein the second signal level is indicative of a greater light intensity received by the photodetector than the first signal level.

3. The method according to any of the preceding claims, wherein the light emitted by the light source is redirected by refraction by passage of light through the filament thereby providing the second signal level.

4. The method according to any of the preceding claims, wherein the method further comprises the step of applying a low-pass filter to the detector signal to increase a duration at which the detector signal is at a signal level to detect that signal level.

5. The method according to any of the preceding claims, wherein the filament has a non-constant transmission coefficient along a longitudinal extension of the filament.

6. The method according to any of the preceding claims, wherein an attenuation coefficient of the filament for light of the light source is at most 1.0 mm⁻¹, for example at most 0.8 mm⁻¹, for example at most 0.6 mm⁻¹, for example at most 0.4 mm⁻¹, such as at most 0.2 mm⁻¹.

7. The method according to any of the preceding claims, wherein the light source has an emission spectrum having a centre emission wavelength, wherein the filament has an absorption spectrum having centre absorption wavelength, wherein the centre emission wavelength is different from the centre absorption wavelength, for example different by 50 nm, for example different by 100 nm, for example different by 150 nm, such as different by 200 nm.

8. An additive manufacturing system for fused deposition modelling, the system comprising:
a printhead for heating and depositing filament;
a filament aperture defining an internal passageway for accommodating the filament at a position along a filament feeding path towards the printhead;
a light source arranged at the filament aperture configured to emit light;
a photodetector configured to provide a detector signal, wherein the light source and the photodetector are both arranged to face the internal passageway; and
a system controller arrangement;
wherein the system controller arrangement is configured to:
monitor the detector signal from the photodetector, wherein the detector signal when no filament is present corresponds to a first signal level; and
detect presence of the filament in the filament aperture based on measuring a second signal level of the detector signal, wherein the second signal level is indicative of a different light intensity received by the photodetector than the first signal level.

9. The additive manufacturing system according to claim 8, wherein the light source and the photodetector are arranged relative to the internal passageway such that filament which is fed through the aperture redirects at least a portion of light emitted by the light source to the photodetector to provide the second signal level.

10. The additive manufacturing system according to any of claims 8-9, wherein the system comprises a filament tube having a lengthwise extension defining the internal passageway along at least a portion of the filament feeding path.

11. The additive manufacturing system according to any of claims 8-10, wherein the system controller arrangement if further configured to:
detect presence of the filament in the filament aperture based on measuring a third signal level of the detector signal, wherein the third signal level is indicative of a smaller light intensity received by the photodetector than the first signal level.

12. The additive manufacturing system according to any of claims 8-11, wherein the system controller arrangement is further configured to:
increase a filament translation speed of a motor arranged to translate the filament in response to detecting the presence of the filament; or
decrease a filament translation speed of a motor arranged to translate the filament in response to detecting the presence of the filament.

13. The additive manufacturing system according to any of claims 8-12, wherein the light source has an emission spectrum having a centre wavelength in a range from 350 nm to 750 nm.

14. The additive manufacturing system according to any of claims 8-13, wherein the system controller arrangement is further configured to detect translation of the filament in the filament aperture based on detecting a change in the detector signal.

15. An additive manufacturing system for fused deposition modelling, the system comprising:
a printhead for heating and depositing filament;
a filament aperture defining an internal passageway for accommodating the filament at a position along a filament feeding path towards the printhead;
a light source arranged at the filament aperture configured to emit light;
a photodetector configured to provide a detector signal, wherein the light source and the photodetector both arranged to face the internal passageway; and
a system controller arrangement;
wherein the system controller arrangement is configured to:
monitor the detector signal from the photodetector; and
detect translation of the filament in the filament aperture based on detecting a change in the detector signal.
